# EUROPÄISCHE PATENTSCHRIFT

(11) **EP 2 213 187 B1**
(45) Veröffentlichungstag und Bekanntmachung des Hinweises auf die Patenterteilung: **25.01.2012**
(21) Anmeldenummer: 10151728.2
(22) Anmeldetag: 27.01.2010
(51) Int. Cl.: A41D 31/00, C08J 5/18, C08G 63/692, C08G 63/672

(54) **Atmungsaktiver Polymerfilm**
Breathable polymer film
Film polymère à respiration active

(30) Priorität: 03.02.2009 EP 09151939
(43) Veröffentlichungstag der Anmeldung: 04.08.2010
(73) Patentinhaber: Sympatex Technologies GmbH, 85774 Unterföhring (DE)
(72) Erfinder: Van de Ven, Henricus Joannes Maria, 6825 CT, Arnhem (NL); Oerlemans, Petrus Joannes Maria, 6852 JP, Huissen (NL); Wittman Gabriele Beate, 74613, Öhringen (DE)
(74) Vertreter: Oberlein, Gerriet H. R.

(56) Entgegenhaltungen:
- EP-A- 0 365 129
- EP-A- 0 761 715
- EP-B- 1 368 405
- WO-A-2005/005512
- DE-A1- 2 646 218

## Beschreibung

Die Erfindung betrifft einen wasserdichten und wasserdampfdurchlässigen Polymerfilm mit einer Wasserdampfdurchlässigkeit von mindestens 1000 g/(m²·Tag) umfassend ein oder mehrere Polymere auf der Grundlage von Copolyetherester und/oder Copolyetheramid.

Polymerfilme oder Membranen des obengenannten Typs sind beispielsweise aus der EP-A-111 360 bekannt. In diesem Dokument werden hydrophile Membranen beschrieben, die sich bevorzugt von längerkettigen Polyglykolen, kurzkettigen Glykolen mit 2 bis 4 Kohlenstoffatomen und Dicarbonsäuren ableiten, wobei vorzugsweise die Polymere Copolyetherester sind, die aus einer Vielzahl von sich wiederholenden, intralinearen langkettigen und kurzkettigen Estereinheiten bestehen, die statistisch über Esterbindungen Kopf an Schwanz verknüpft sind.

Während der Einsatz von wasserdichten und wasserdampfdurchlässigen Membranen in Geweben für den alltäglichen Bedarf, wie z.B. Oberbekleidung, Sportbekleidung oder auch in Schuhen unproblematisch ist, stößt die Verwendbarkeit von Membranen auf Basis Copolyetherester und/oder Copolyetheramid im Schutzbekleidungssektor auf Einschränkungen. Die Grenzen der Einsetzbarkeit sind insbesondere dort anzutreffen, wo es auf Flammbeständigkeit ankommt, beispielsweise in der Schutzkleidung von Feuerwehrleuten oder auch in der Arbeitsbekleidung in Betrieben, in denen Hochtemperaturprozesse ablaufen, wie beispielsweise in der Eisen- und Stahlindustrie und ähnlichen Bereichen. Nicht zuletzt ist die Flammbeständigkeit von Geweben gegenüber hohen Temperaturen und Feuer auch in Bereichen des täglichen Lebens zunehmend wichtiger aufgrund der stets strikter werdenden Brandschutzverordnungen, insbesondere im Bereich der Gastronomie und der Hotellerie. Für solche Anwendungen wird den perforierten PTFE-Filmen noch sehr der Vorzug gegeben, und zwar sowohl wegen ihrer porösen Struktur mit Poren eines Durchmessers von weniger als etwa 0,2 µm als auch aufgrund der Tatsache, dass der Brennwiderstand bzw. die Hitzeresistenz wegen der Halogene in der PTFE Membran höher eingeschätzt wird als in den nicht-halogenierten Polymermembranen.

Aufgabe der vorliegenden Erfindung ist es daher, Polymerfilme mit den eingangs beschriebenen Merkmalen zur Verfügung zu stellen, die darüber hinaus eine höhere Flammbeständigkeit bzw. Flammhemmung aufweisen, als die aus dem Stand der Technik bekannten Polymerfilme auf Basis von Copolyetherestern und/oder Copolyetheramiden.

Diese Aufgabe wird gelöst durch einen wasserdichten und wasserdampfdurchlässigen Polymerfilm mit einer Wasserdampfdurchlässigkeit von mindestens 1000 g/(m²·Tag) umfassend ein oder mehrere Polymere auf der Grundlage von Copolyetherester oder Copolyetheramid oder einer Mischung aus Copolyetherester und Copolyetheramid, wobei der Polymerfilm dadurch gekennzeichnet ist, dass das eine Polymer oder die mehreren Polymere Phosphor enthalten, wobei der Phosphor
a) in Form von phosphorhaltigen Comonomeren vorliegt, welche in das eine Polymer oder in die mehreren Polymere einkondensiert sind, oder
b) in Form mindestens eines phosphorhaltigen Additives vorliegt, das dem einen Polymer oder den mehreren Polymeren beigemischt ist, wobei es sich bei den phosphorhaltigen Additiven um
   i) Phosphinsäuresalze oder Diphosphinsäuresalze oder deren Polymere oder deren Mischungen oder aromatische Polyphosphate oder
   ii) Melaminphosphate oder Melaminpolyphosphate handelt, oder
c) mit einem ersten Gewichtsteil bezogen auf den Polymerfilm in Form von phosphorhaltigen Comonomeren wie unter a) und mit einem zweiten Gewichtsteil bezogen auf den Polymerfilm in Form mindestens eines phosphorhaltigen Additives wie unter b) vorliegt.

Überraschenderweise zeigt der erfindungsgemäße Film im Vergleich zu einem Vergleichspolymerfilm, der kein Phosphor enthält, bei einer Wasserdampfdurchlässigkeit, die weiterhin mindestens 1000 g/(m²·Tag) beträgt, eine deutlich erhöhte Flammbeständigkeit bzw. Flammhemmung, die sich z.B. durch die Messung der Flächen- und Kantenbeflammung gemäß EN ISO 15025 (Februar 2003) nachweisen lässt.

Die eben beschriebene überraschende Eigenschaftskombination ist markant ausgeprägt sowohl in der Ausführungsalternative des erfindungsgemäßen Polymerfilms, worin der Phosphor in Form von phosphorhaltigen Comonomeren vorliegt, welche in das eine Polymer bzw. in die mehreren Polymere einkondensiert sind, als auch in der Ausführungsalternative des erfindungsgemäßen Polymerfilms, worin der Phosphor in Form mindestens eines phosphorhaltigen Additives dem einen Polymer oder den mehreren Polymeren beigemischt vorliegt. Dabei hat sich überraschenderweise gezeigt, dass der Einbau der phosphorhaltigen Comonomeren bzw. das Beimischen des mindestens einen phosphorhaltigen Additives die übrigen Eigenschaften des erfindungsgemäßen Polymerfilms, wie z.B. die mechanischen Eigenschaften (u.a. Festigkeit, Dehnung und Abrieb) nicht negativ beeinflusst. Insbesondere die Wasserdampfdurchlässigkeit des erfindungsgemäßen Polymerfilms liegt,
- sowohl, wenn der Phosphor in Form von phosphorhaltigen Comonomeren vorliegt, welche in das eine Polymer bzw. in die mehreren Polymere einkondensiert sind,
- als auch dann, wenn der Phosphor in Form mindestens eines phosphorhaltigen Additives dem einen Polymer oder den mehreren Polymeren beigemischt vorliegt,
nicht nur stets deutlich oberhalb von 1000 g/(m² ·Tag), sondern typischerweise in dem für Polymere auf der Grundlage von Copolyetherester und/oder Copolyetheramid charakteristischen Bereich von oberhalb 2000 g/(m² Tag) bis etwa 3500 g/(m²·Tag) bei einer Dicke des Polymerfilms von etwa 15 µm. Dieses Ergebnis ist besonders überraschend, weil der Fachmann erwartet hätte, dass sowohl der Einbau von phosphorhaltigen Comonomeren in das eine Polymer oder in die mehreren Polymere als auch das Beimischen eines phosphorhaltigen Additives die Morphologie der Polymere auf der Grundlage von Copolyetherester und/oder Copolyetheramid, die für ihre Eigenschaftskombination aus Wasserdichtheit und hoher Wasserdampfdurchlässigkeit bekannt ist, zumindest verändert, wenn nicht gar zerstört, sodass als Folge dieser Veränderung bzw. Zerstörung erwartet werden musste, dass sowohl der erfindungsgemäße Einbau von phosphorhaltigen Comonomeren als auch das Beimischen des mindestens einen phosphorhaltigen Additives in eine auf Wasserdampfdurchlässigkeit optimierte Morphologie die Wasserdampfdurchlässigkeit eines Polymerfilms auf der Grundlage von Copolyetherester und/oder Copolyetheramid mit derartig modifizierter Morphologie verschlechtern sollte. Umso mehr muss es daher überraschen, dass im erfindungsgemäßen Polymerfilm die Wasserdampfdurchlässigkeit stets deutlich oberhalb von 1000 g/(m² Tag) und typischerweise in dem für Polymere auf der Grundlage von Copolyetherester und/oder Copolyetheramid charakteristischen Bereich von oberhalb 2000 g/(m² ·Tag) bis etwa 3500 g/(m²·Tag) bei einer Dicke des Polymerfilms von etwa 15 µm liegt.

Im erfindungsgemäßen Polymerfilm ist der Phosphor bevorzugt in einer Konzentration von mindestens 0,4 Gewichtsprozent bezogen auf den Polymerfilm enthalten. Es ist ferner bevorzugt, dass die Phosphorkonzentration in einem Bereich von etwa 0,4 bis etwa 10 Gewichtsprozent bezogen auf den Polymerfilm eingestellt wird.

In einer bevorzugten Ausführungsform des erfindungsgemäßen Polymerfilms liegt in der Ausführungsform c) der erste Gewichtsteil im Bereich von 0,01 bis 85 % und der zweite Gewichtsteil im Bereich von 15 bis 99,99 %, wobei besonders bevorzugt der erste Gewichtsteil im Bereich von 0,1 bis 60 % und der zweite Gewichtsteil im Bereich von 40 bis 99,9 % liegt, und die Summe des ersten und des zweiten Gewichtsteils jeweils 100 % beträgt.

In bevorzugten Ausführungsformen kann der erfindungsgemäße Polymerfilm zusätzlich zu den einkondensierten phosphorhaltigen Comonomeren und/oder dem mindestens einen phosphorhaltigen beigemischten Additiv mindestens ein weiteres flammhemmendes, jedoch keinen Phosphor enthaltendes Additiv enthalten. Dabei liegt der Gewichtsanteil des mindestens einen weiteren flammhemmenden, jedoch keinen Phosphor enthaltenden Additives im Allgemeinen zwischen 0,5 und 30 %, bezogen auf die Gesamtmasse der Kunststoff-Formmasse, die zur Herstellung des erfindungsgemäßen Polymerfilms eingesetzt wird. Die optimale Menge des mindestens einen weiteren flammhemmenden, jedoch keinen Phosphor enthaltenden Additives hängt von der Natur des Polymers, der Art und Menge der eingesetzten einkondensierten phosphorhaltigen Comonomeren bzw. des mindestens einen phosphorhaltigen beigemischten Additives und der Art des mindestens einen weiteren flammhemmenden, jedoch keinen Phosphor enthaltenden Additives ab. Bevorzugt sind 1 bis 20 Gew.-%, insbesondere bevorzugt 3 bis 15 Gew.-%, bezogen auf die Gesamtmasse der Kunststoff-Formmasse, die zur Herstellung des erfindungsgemäßen Polymerfilms eingesetzt wird.

Die Herstellung des einen bzw. der mehreren den erfindungsgemäßen Polymerfilm bildenden Polymere auf Grundlage von Copolyetherester und/oder Copolyetheramid erfolgt durch Polykondensation. Um die Polykondensationsgeschwindigkeit möglichst unverändert zu lassen, und auch, um die Ausbeute, die Flammbeständigkeit bzw. die Flammhemmung und die chemische Beständigkeit, sowie Dauerhaftigkeit nach Pflege (Wäsche und/oder chemische Reinigung) des resultierenden Polymers zu erhöhen, ist es für den erfindungsgemäßen Polymerfilm bevorzugt, wenn in dem zur Herstellung des Films eingesetzten Polymer der Phosphor in den phosphorhaltigen Comonomeren als Seitengruppe enthalten ist. Das Einkondensieren der Comonomeren in die Hauptkette kann dann erfolgen, ohne dass sich anschließend ein zusätzliches Heteroatom in der Hauptkette befindet.

Als Copolyetherester werden solche Polymere bevorzugt, deren vorzugsweise kurzkettigen Estereinheiten ganz oder im Wesentlichen aus Polybutylenterephthalateinheiten bestehen. Filme aus diesen Copolyetherestern kann der Fachmann herstellen, ohne erfinderisch tätig werden zu müssen.

Für spezielle Anwendungen kann die Ersetzung eines geringen Prozentsatzes von 1,4-Butandiol durch ein anderes Diol und/oder die Ersetzung von Terephthalsäure durch eine andere Dicarbonsäure von Vorteil sein, wie im Folgenden näher ausgeführt wird:
Beispielsweise kann das andere Diol, das 1,4-Butandiol ersetzen kann, ein acyclisches, alicyclisches Diol oder eine aromatische Dihydroxyverbindung sein. Bevorzugt werden Diole mit 2 - 15 Kohlenstoffatomen, wie Ethylen-, Propylen-, Isobutylen-, Pentamethylen-, 2,2-Dimethyltrimethylen-, Hexamethylen- und Decamethylenglykol, Dihydroxycyclohexan, Cyclohexandimethanol, Resorcin, Hydrochinon und 1,5-Dihydroxynaphthalin. Insbesondere werden aliphatische Diole mit 2 - 8 C-Atomen bevorzugt. Auch Bisphenole, wie z.B. Bis-(p-hydroxy)-biphenyl, Bis-(p-hydroxyphenyl)-methan und Bis-(p-hydroxyphenyl)-propan, können zu Ersatz von 1,4-Butandiol eingesetzt werden.

Die entsprechenden esterbildenden Derivate der Diole sind ebenfalls zum Ersatz von 1,4-Butandiol geeignet. So kann zum Beispiel Epoxyethan oder Ethylencarbonat an Stelle von Ethylenglykol verwendet werden.

Zu den Dicarbonsäuren, die als Ersatz für Terephthalsäure eingesetzt werden können und die mit den vorstehend genannten langkettigen Diolen und mit den Diolen eines geringen Molekulargewichts zu Copolyetherestern umgesetzt werden, gehören aliphatische, cycloaliphatische oder aromatische Dicarbonsäuren mit einem Molekulargewicht von höchstens 300.

Unter dem Ausdruck "Dicarbonsäure" werden hier ebenfalls Äquivalente von Dicarbonsäure mit zwei funktionellen Carboxylgruppen verstanden, die sich bei der Umsetzung mit Glykolen und Diolen zu Copolyestern nahezu in derselben Weise verhalten wie die Dicarbonsäuren selbst. Zu diesen Äquivalenten gehören Ester oder esterbildende Derivate, wie die Säurehalogenide und Anhydride. Die Dicarbonsäuren können willkürliche substituierte Gruppen oder Kombinationen davon enthalten, soweit sie die Copolyesterbildung nicht stören. Der Ausdruck "aliphatische Dicarbonsäuren" bezieht sich hier auf Carbonsäuren mit zwei Carboxylgruppen, die jede an einem gesättigten Kohlenstoffatom gebunden sind. Aliphatische oder cycloaliphatische Säuren mit konjugierten ungesättigten Bindungen können wegen einer eintretenden Homopolymerisation oft nicht verwendet werden. Einige ungesättigte Säuren, wie Maleinsäure, können jedoch angewandt werden. Unter dem Ausdruck "aromatische Dicarbonsäuren" werden hier Dicarbonsäuren mit zwei Carboxylgruppen verstanden, die an einem Kohlenstoffatom eines Benzolrings oder eines kondensierten Benzolrings gebunden sind. Es ist nicht erforderlich, dass die beiden funktionellen Carboxylgruppen an demselben aromatischen Ring gebunden sind, und wenn mehr als ein aromatischer Ring vorhanden ist, können diese Ringe durch aliphatische oder aromatische oder andere zweiwertige Gruppen, wie -0- oder -SO₂-, verbunden sein. Bevorzugt werden Cyclohexandicarbonsäuren und Adipinsäure.

Zu den verwendbaren aromatischen Dicarbonsäuren gehören Phthalsäure und Isophthalsäure, Dibenzoesäure, substituierte Dicarboxylverbindungen mit zwei Benzolkernen, wie (Bis-(p-carboxyphenyl)-methan, p-Oxy-(p-carboxyphenyl)-benzoesäure, Ethylen-bis-(p-Oxybenzoesäure), Phenanthrendicarbonsäure, Anthracendicarbonsäure, 4,4-Sulfonyldibenzoesäure, einschließlich der C1 - C12-Alkylgruppen und Ringsubstitionsderivate hiervon, wie Halogen-, Alkoxy- und Arylderivate. Hydroxysäuren wie p-(β-Hydroxyethoxy)-benzoesäure können ebenfalls verwendet werden, unter der Bedingung, dass ebenfalls eine aromatische Dicarbonsäure anwesend ist. Ganz besonders bevorzugt von den aromatischen Dicarbonsäuren werden die Naphthalindicarbonsäuren, wie 1,5-Naphthalindicarbonsäure, 2,6-Naphthalindicarbonsäure sowie 2,7-Naphthalindicarbonsäure.

Ganz bevorzugt handelt es sich bei dem Copolyetherester, der zur Herstellung des erfindungsgemäßen Polymerfilms eingesetzt wird, um einen Ester aus Polybutylenterephthalat und einem Polyalkylenenoxidglycol als langkettigem Glycol.

Vorzugsweise bestehen die langkettigen Glykole gänzlich aus Polyethylenoxidglykol. In einigen Fällen kann es erwünscht sein, statistische Copolymere oder Blockcopolymere des Epoxyethans und geringere Mengen eines zweiten Epoxyalkans anzuwenden. Vorzugsweise sollte die Menge des zweiten Monomeren weniger als 40 Molprozent der Polyalkylenoxidglykole betragen und insbesondere weniger als 20 Molprozent. Geeignete Beispiele solcher Zweitmonomeren sind 1,2- und 1,3-Epoxypropan, 1,2-Epoxybutan und Tetrahydrofuran. Es ist ebenfalls möglich, Gemische aus Polyethylenoxidglykol und einem zweiten Polyalkylenoxidglykol, wie Poly-1,2-propylenoxidglykol oder Polytetramethylenoxidglykol, anzuwenden.

Bevorzugt als Polyalkylenoxidglycol ist Polyethylenoxidglycol mit einem Molekulargewicht im Bereich von 800 bis 6000.

In einer weiteren ganz besonders bevorzugten Ausführungsform des erfindungsgemäßen Polymerfilms handelt es sich bei dem Copolyetherester, der zur Herstellung des erfindungsgemäßen Polymerfilms eingesetzt wird, um einen Ester aus Polyethylennaphthalat und einem Polyalkylenenoxidglycol als langkettigem Glycol.

Handelt es sich bei dem einen oder bei den mehreren Polymeren, die der erfindungsgemäße Polymerfilm umfasst, um Polymere auf der Grundlage von Copolyetheramid, so werden Polyetheramid-Blockcopolymere bevorzugt, die in EP 0 761 715 A1 beschrieben sind und vor allem aus Polykondensaten von Homo- oder Copolyamiden mit reaktiven Endgruppen mit Homo- oder Copolyethern mit reaktiven Endgruppen bestehen können.

Vorzugsweise handelt es sich bei dem Copolyetheramid, das für das eine oder für die mehreren Polymere des erfindungsgemäßen Polymerfilms eingesetzt werden kann, um ein Polyetheramid, dessen Amidkomponente aus PA 6, PA 11 oder PA 12 besteht, wobei die Amidkomponente über Ether- oder Esterbindungen mit mindestens einem Polyalkylenoxidsegment verknüpft ist.

Besonders bevorzugt handelt es sich bei den Copolyetheramid, das für das eine oder für die mehreren Polymere des erfindungsgemäßen Polymerfilms eingesetzt werden kann, um ein Copolyetheramid, das aus ε-Caprolactam, Adipinsäure und einem Polyalkylenoxidsegment hergestellt ist, wobei das Polyalkylenoxidsegment z.B. ein Polyalkylenoxiddiamin wie z.B. ein Polyethylenoxiddiamin oder ein Polypropylenoxiddiamin ist.

In einer bevorzugten Ausführungsform handelt es sich bei dem Polyalkylenoxidsegment des Copolyetheramids um Polyethylenoxiddiamin bzw. Polypropylenoxiddiamin mit einem Molekulargewicht im Bereich von 800 bis 6000.

Die im erfindungsgemäßen Polymerfilm einkondensierten phosphorhaltigen Comonomeren sind bevorzugt Phosphaphenanthrenderivate, von denen insbesondere das 9,10-Dihydro-oxa-10-[2,3-di-(2-hydroxyethoxy)carbonylpropyl]-10-phophaphenanthren-10-oxid sowie die 2- (9,10-Dihydro-9-oxa-10-oxid-10-phophaphenanthrene-10-yl-)-methylbernsteinsäure bevorzugt werden. Derartige Phosphaphenanthrenderivate sind beispielsweise unter dem Handelsnamen UKANOL von der Fa. Schill und Seilacher, Böblingen (Deutschland) erhältlich, die vorstehend genannten Derivate als UKANOL FR50/1 und UKANOL RD.

Sowohl das mindestens eine phosphorhaltige beigemischte Additiv (im Folgenden als P-Additiv bezeichnet) als auch das mindestens eine weitere flammhemmende, jedoch keinen Phosphor enthaltende Additiv (im Folgenden als Nicht-P-Additiv bezeichnet) können nach gängigen Verfahren in die zur Herstellung des erfindungsgemäßen Polymerfilms jeweils eingesetzten entsprechenden Copolyetherester und/oder Copolyetheramide eingearbeitet werden.

Beispielsweise können alle Additive als Pulver und/oder Granulat in einem Mischer vorgemischt und anschließend in einem geeigneten Compoundieraggregat, z.B. einem Doppelschneckenextruder in der Polymerschmelze homogenisiert werden. Die Schmelze wird dann üblicherweise als Strang abgezogen, abgekühlt und granuliert.

Die Additive, also das P-Additiv und/oder das Nicht-P-Additiv, können auch separat über eine Dosieranlage direkt dem Compoundieraggregat zugeführt werden.

Weiterhin können die Additive, also das P-Additiv und/oder das Nicht-P-Additiv beispielsweise dem fertigen Polymergranulat, d.h. dem Copolyetherester- und/oder Copolyetheramid-Granulat, beigemischt und die Mischung auf einer geeigneten Extrusionsanlage zu einem erfindungsgemäßen Polymerfilm verarbeitet werden.

Ebenso ist es möglich, die Additive, also das P-Additiv und/oder das Nicht-P-Additiv, bereits während der Polykondensation der Copolyetherester oder Copolyetheramide in die Reaktionsmasse zu geben.

In den Ausführungsformen des erfindungsgemäßen Polymerfilms, in denen der Phosphor in Form mindestens eines phosphorhaltigen Additives vorliegt, handelt es sich bei den phosphorhaltigen Additiven um
i) Phosphinsäuresalze oder Diphosphinsäuresalze oder deren Polymere oder deren Mischungen, die beispielsweise unter den Handelsnamen EXOLIT OP von der Fa. Clariant oder PHOSLITE von der Fa. Italmatch Chemicals erhältlich sind, oder um aromatische Polyphosphate, die beispielsweise unter dem Handelsnamen ADK STAB FP von der Fa. Adeka Palmarole erhältlich sind, oder um
ii) Melaminphosphate oder Melaminpolyphosphate, die beispielsweise unter den Handelsnamen MELAPUR MP und MELAPUR 200 von der Fa. Ciba erhältlich sind.

In den Ausführungsformen des erfindungsgemäßen Polymerfilms, in denen zusätzlich zu den einkondensierten phosphorhaltigen Comonomeren und/oder dem mindestens einen phosphorhaltigen Additiv mindestens ein weiteres flammhemmendes, jedoch keinen Phosphor enthaltendes Additiv vorliegt, handelt es sich bei dem mindestens einen weiteren flammhemmenden, jedoch keinen Phosphor enthaltenden Additiv vorzugsweise um stickstoffhaltige Additive auf Basis von Melamincyanurat, die beispielsweise unter den Handelsnamen MELAPUR MC von der Fa. Ciba oder MELAGARD MC von der Fa. Italmatch Chemicals erhältlich sind.

Der erfindungsgemäße Polymerfilm kann zusätzlich zu dem einen bzw. den mehreren Polymeren und Additiven, die vorstehend beschrieben wurden, Zusätze enthalten, die bei der Herstellung von Polymerfilmen üblicherweise eingesetzt werden, wie z.B. UV-Stabilisatoren, Antioxidantien, thermolytische Stabilisatoren, Antiblockmittel, Mattierungsmittel, Nukleierungsmittel, Nanopartikel auf mineralischer Basis (Silikate) oder Kohlenstoff oder Indium/Zinn-Oxid (ITO), Pigmente und Antistatika, wobei die Zusätze einzeln oder im Gemisch eingesetzt werden können.

Der erfindungsgemäße Polymerfilm ist wegen seiner vorteilhaften Kombination
- von Wasserdichtigkeit bei einer Wasserdampfdurchlässigkeit, die mindestens 1000 g/(m² Tag) beträgt, mit
- einer deutlich erhöhten Flammbeständigkeit bzw. Flammhemmung für alle Anwendungsfelder geeignet, in denen es auf die genannte Eigenschaftskombination ankommt.

In einem dieser Anwendungsfelder wird der erfindungsgemäße Polymerfilm auf textile Flächengebilde, wie z.B. auf Gewebe, Vliese, Gewirke oder Gestricke laminiert, wobei die textilen Flächengebilde in Bahnenform vorliegen können. Deshalb ist die Verwendung des erfindungsgemäßen Polymerfilms in Form von textilen Flächengebilden, auf die der erfindungsgemäße Polymerfilm laminiert ist, ebenfalls Teil der vorliegenden Erfindung.

In einer bevorzugten Verwendung werden die textilen Flächengebilde, auf die der erfindungsgemäße Polymerfilm laminiert ist, zur Herstellung von wasserdichten und wasserdampfdurchlässigen Bekleidungen eingesetzt, wobei die Bekleidungen insbesondere Schutzkleidung und Schuhe sind.

In einer weiteren bevorzugten Verwendung werden die textilen Flächengebilde, auf die der erfindungsgemäße Polymerfilm laminiert ist, zur Herstellung von Zelten verwendet.

In einer weiteren bevorzugten Verwendung werden die textilen Flächengebilde, auf die der erfindungsgemäße Polymerfilm laminiert ist, in der Bauindustrie verwendet, insbesondere als Dachunterspannbahnen.

Die Erfindung wird nachfolgend an einigen (Vergleichs)beispielen näher erläutert:

### Vergleichsbeispiel

Ein Vergleichspolymerfilm V (Sympatex Standard Membrane aus einem Polyetherester aus 70 Gewichtsteilen Polybutylenterephthalat und 30 Gewichtsteilen Polyethylenglykol mit einem Molekulargewicht von 4000 g/mol (PEG4000) wird mit einer Dicke von 0,011 mm hergestellt. Die Wasserdampfdurchlässigkeit WDD [g/m²·Tag] gemäß ASTM E96-66 Methode B mit der Modifikation, dass T_{Wasser} = 30 °C beträgt, und das Verhalten des Films bei Flächen- und Kantenbeflammung gemäß EN ISO 15025 (Februar 2003) werden bestimmt. Die Ergebnisse sind in Tabelle 1 zusammengefasst.

### Beispiel 1

Ein erfindungsgemäßer Polymerfilm I aus einem Polyetherester aus 70 Gewichtsteilen des gleichen Polybutylenterephthalats wie im Vergleichsbeispiel, enthaltend UKANOL RD, das in einer Menge einkondensiert ist, die bezogen auf das Gesamtgewicht des Polymerfilms I 1 Gew.-% Phosphor entspricht, und 30 Gewichtsteilen Polyethylenglykol (PEG4000) wird mit einer Dicke von 0,015 mm hergestellt. Die Wasserdampfdurchlässigkeit WDD [g/m²·Tag] gemäß ASTM E96-66 Methode B mit der Modifikation, dass T_{Wasser} = 30 °C beträgt, und das Verhalten des Films bei Flächen- und Kantenbeflammung gemäß EN ISO 15025 (Februar 2003) werden bestimmt. Die Ergebnisse sind in Tabelle 1 zusammengefasst.

### Beispiel 2

Ein erfindungsgemäßer Polymerfilm II aus einem Polyetherester aus 70 Gewichtsteilen des gleichen Polybutylenterephthalats wie im Vergleichsbeispiel, enthaltend UKANOL RD, das in einer Menge einkondensiert ist, die bezogen auf das Gesamtgewicht des Polymerfilms II 1,5 Gew.-% Phosphor entspricht, und 30 Gewichtsteilen Polyethylenglykol (PEG4000) wird mit einer Dicke von 0,016 mm hergestellt. Die Wasserdampfdurchlässigkeit WDD [g/m²·Tag] gemäß ASTM E96-66 Methode B mit der Modifikation, dass T_{Wasser} = 30°C beträgt, und das Verhalten des Films bei Flächen- und Kantenbeflammung gemäß EN ISO 15025 (Februar 2003) werden bestimmt. Die Ergebnisse sind in Tabelle 1 zusammengefasst.

### Beispiel 3

Ein erfindungsgemäßer Polymerfilm III aus einem Polyetherester aus 75 Gewichtsteilen eines Polyethylennaphthalats, enthaltend UKANOL FR 50/1, das in einer Menge einkondensiert ist, die bezogen auf das Gesamtgewicht des Polymerfilms III 1,5 Gew.-% Phosphor entspricht, und 25 Gewichtsteilen Polyethylenglykol (PEG2000) wird mit einer Dicke von 0,016 mm hergestellt. Die Wasserdampfdurchlässigkeit WDD [g/m²·Tag] gemäß ASTM E96-66 Methode B mit der Modifikation, dass T_{Wasser} = 30 °C beträgt, und das Verhalten des Films bei Flächen- und Kantenbeflammung gemäß EN ISO 15025 (Februar 2003) werden bestimmt. Die Ergebnisse sind in Tabelle 1 zusammengefasst.

### Beispiel 4

Granulate (A) eines Polyetheresters aus 70 Gewichtsteilen des gleichen Polybutylenterephthalats wie im Vergleichsbeispiel, enthaltend UKANOL RD, das in einer Menge einkondensiert ist, die bezogen auf das Gesamtgewicht des Polyetheresters 1 Gew.-% Phosphor entspricht, und 30 Gewichtsteilen Polyethylenglykol (PEG4000) werden mit Granulaten (B), bestehend aus 73 Gewichtsteilen des gleichen Polyetheresters wie im Vergleichsbeispiel und aus 27 Gewichtsteilen Melagard MC8 im Gewichtsverhältnis A:B = 1,7:1 vermischt. Aus der resultierenden Kunststoff-Formmasse wird ein erfindungsgemäßer Polymerfilm IV mit einer Dicke von 0,018 mm hergestellt. Die Wasserdampfdurchlässigkeit WDD [g/m²·Tagj gemäß ASTM E96-66 Methode B mit der Modifikation, dass T_{Wasser} = 30 °C beträgt, und das Verhalten des Films bei Flächen- und Kantenbeflammung gemäß EN ISO 15025 (Februar 2003) werden bestimmt. Die Ergebnisse sind in Tabelle 1 zusammengefasst.

### Beispiel 5

Ein erfindungsgemäßer Polymerfilm V wird aus einer Kunststoff-Formmasse bestehend aus 80 Gewichtsteilen des gleichen Polyetheresters wie im Vergleichsbeispiel und aus 20 Gewichtsteilen Exolit OP 935 mit einer Dicke von 0,019 mm hergestellt. Die Wasserdampfdurchlässigkeit WDD [g/m²·Tag] gemäß ASTM E96-66 Methode B mit der Modifikation, dass T_{Wasser} = 30 °C beträgt, und das Verhalten des Films bei Flächen- und Kantenbeflammung gemäß EN ISO 15025 (Februar 2003) werden bestimmt. Die Ergebnisse sind in Tabelle 1 zusammengefasst.

### Beispiel 6

Ein erfindungsgemäßer Polymerfilm VI wird aus einer Kunststoff-Formmasse bestehend aus 80 Gewichtsteilen des gleichen Polyetheresters wie im Vergleichsbeispiel, aus 10 Gewichtsteilen Exolit OP 935 und aus 10 Gewichtsteilen Melagard MC8 mit einer Dicke von 0,015 mm hergestellt. Die Wasserdampfdurchlässigkeit WDD [g/m²·Tag] gemäß ASTM E96-66 Methode B mit der Modifikation, dass T_{Wasser} = 30 °C beträgt, und das Verhalten des Films bei Flächen- und Kantenbeflammung gemäß EN ISO 15025 (Februar 2003) werden bestimmt. Die Ergebnisse sind in Tabelle 1 zusammengefasst.

In Tabelle 1 bedeuten
- "Flächenbeflammung" das Beflammen des Polymerfilms senkrecht zu seiner Ebene unter den in EN ISO 15025 (Februar 2003) festgelegten Bedingungen, wobei beschrieben ist, wie sich der Polymerfilm bezüglich der Brandlochausbreitung in Längs- (L) bzw. Querrichtung (Q) verhält,
- "Kantenbeflammung" das Beflammen der unteren Kante des Polymerfilms parallel zu seiner Ebene unter den in EN ISO 15025 (Februar 2003) festgelegten Bedingungen, wobei beschrieben ist, wie sich der Polymerfilm bezüglich der Brandlochausbreitung in Längs- (L) bzw. Querrichtung (Q) verhält, und
- "NBZ" die Nachbrennzeit in Sekunden, d.h. die Zeit, die der Polymerfilm unter den in EN ISO 15025 (Februar 2003) festgelegten Bedingungen weiterbrennt, nachdem die Gasflamme entfernt worden ist.

**Tabelle 1:**

| Polymer-film | Dicke [mm] | WDD [g/m²·Tag] | Flächenbeflammung NBZ [s] | Kantenbeflammung NBZ [s] |
|---|---|---|---|---|
| Vergleichsbeispiel | 0,011 | 3074 | L: 0; Flamme erreicht Ober- und Seitenkante. | L: 0; Flamme erreicht Ober- und Seitenkante, brennendes Abtropfen; |
| | | | Q: 0; Flamme erreicht Ober- und Seitenkante, brennendes Abtropfen; | Q: 0; Flamme erreicht Ober- und Seitenkante, brennendes Abtropfen; |
| I | 0,015 | 2934 | L: 0; Flamme erreicht Oberkante | L: 0; Flamme erreicht Ober- und Seitenkante, brennendes Abtropfen; |
| | | | Q: 0; nur Lochbildung; | Q: 0; nur Lochbildung |
| II | 0,016 | 2996 | L: 0; nur Lochbildung; | L: 0; nur Lochbildung; |
| | | | Q: 0; nur Lochbildung; | Q: 0; nur Lochbildung |
| III | 0,016 | 2815 | L: 0; nur Lochbildung; | L: 0; nur Lochbildung; |
| | | | Q: 0; nur Lochbildung; | Q: 0; nur Lochbildung |
| IV | 0,018 | 2903 | L: 0; nur Lochbildung; | L: 0; nur Lochbildung; |
| | | | Q: 0; nur Lochbildung; | Q: 0; nur Lochbildung |
| V | 0,019 | 2819 | L: 0; nur Lochbildung; | L: 0; nur Lochbildung; |
| | | | Q: 0; nur Lochbildung; | Q: 0; nur Lochbildung |
| VI | 0,015 | 3028 | L: 0; nur Lochbildung; | L: 0; nur Lochbildung; |
| | | | Q: 0; nur Lochbildung; | Q: 0; nur Lochbildung |

Aus Tabelle 1 lassen sich die folgenden Ergebnisse ablesen:
Die Flächen- und Kantenbeflammung des Polymerfilms des Vergleichsbeispiels und der erfindungsgemäßen Polymerfilme I bis VI führt zu einer Nachbrennzeit von 0 Sekunden.

Jedoch erreicht die Flamme bei Flächenbeflammung des Polymerfilms des Vergleichsbeispiels sowohl in L- als auch in Q-Richtung die Ober- und Seitenkante des Vergleichspolymerfilms, wobei es in Q-Richtung zu brennendem Abtropfen kommt. Auch bei Kantenbeflammung des Vergleichspolymerfilms erreicht die Flamme sowohl in L- als auch in Q-Richtung die Ober- und Seitenkante des Vergleichspolymerfilms, wobei zusätzlich in Längs- und Querrichtung brennendes Abtropfen beobachtet wird.

Bei der Flächenbeflammung des erfindungsgemäßen Polymerfilms I erreicht die Flamme zwar in L-Richtung die Oberkante. Jedoch wird in Q-Richtung nur Lochbildung festgestellt. Bei Kantenbeflammung verhält sich der erfindungsgemäße Polymerfilm I in L-Richtung wie der Vergleichspolymerfilm. Jedoch wird beim erfindungsgemäßen Polymerfilm I in Q-Richtung nur Lochbildung festgestellt.

Bei der Flächen- und bei der Kantenbeflammung der erfindungsgemäßen Polymerfilme II bis VI wird jeweils sowohl in L- als auch in Q-Richtung nur Lochbildung festgestellt.

Somit zeigen sowohl der erfindungsgemäße Polymerfilm I und in noch stärkerem Ausmaß die erfindungsgemäßen Polymerfilme II bis VI im Vergleich zum Vergleichspolymerfilm eine deutlich erhöhte Flammhemmung und eine Wasserdampfdurchlässigkeit oberhalb von 2000 g/(m²·Tag) bis etwa 3000 g/(m²·Tag), obwohl der Fachmann erwartet hätte, dass die auf Wasserdichtigkeit und Wasserdampfdurchlässigkeit optimierte Morphologie der Polyetherester durch die erfindungsgemäß einkondensierten phosphorhaltigen Comonomere, bzw. durch die erfindungsgemäß beigemischten phosphorhaltigen und/oder stickstoffhaltigen Additive zumindest verändert wird.

## Patentansprüche

1. Wasserdichter und wasserdampfdurchlässiger Polymerfilm mit einer Wasserdampfdurchlässigkeit von mindestens 1000 g/(m²·Tag) umfassend ein oder mehrere Polymere auf der Grundlage von Copolyetherester oder Copolyetheramid oder einer Mischung aus Copolyetherester und Copolyetheramid, **dadurch gekennzeichnet, dass** das eine Polymer oder die mehreren Polymere Phosphor enthalten, wobei der Phosphor
a) in Form von phosphorhaltigen Comonomeren vorliegt, welche in das eine Polymer oder in die mehreren Polymere einkondensiert sind, oder
b) in Form mindestens eines phosphorhaltigen Additives vorliegt, das dem einen Polymer oder den mehreren Polymeren beigemischt ist, wobei es sich bei den phosphorhaltigen Additiven um
i) Phosphinsäuresalze oder Diphosphinsäuresalze oder deren Polymere oder deren Mischungen oder aromatische Polyphosphate oder
ii) Melaminphosphate oder Melaminpolyphosphate handelt, oder
c) mit einem ersten Gewichtsteil bezogen auf den Polymerfilm in Form von phosphorhaltigen Comonomeren wie unter a) und mit einem zweiten Gewichtsteil bezogen auf den Polymerfilm in Form mindestens eines phosphorhaltigen Additives wie unter b) vorliegt.

2. Der Polymerfilm nach Anspruch 1, **dadurch gekennzeichnet, dass** der Phosphor in einer Konzentration von mindestens 0,4 Gewichtsprozent bezogen auf den Polymerfilm enthalten ist.

3. Der Polymerfilm nach Anspruch 1 oder 2, **dadurch gekennzeichnet, dass** in der Ausführungsform c) der erste Gewichtsteil im Bereich von 0,01 bis 85 % und der zweite Gewichtsteil im Bereich von 15 bis 99.99 % liegt, und die Summe des ersten und des zweiten Gewichtsteils jeweils 100 % beträgt.

4. Der Polymerfilm nach einem oder mehreren der Ansprüche 1 bis 3, **dadurch gekennzeichnet, dass** der Phosphor in den phosphorhaltigen Comonomeren als Seitengruppe enthalten ist.

5. Der Polymerfilm nach einem oder mehreren der Ansprüche 1 bis 4, **dadurch gekennzeichnet, dass** es sich bei dem Copolyetherester um einen Ester aus Polybutylenterephthalat und einem Polyalkylenenoxidglycol handelt.

6. Der Polymerfilm nach einem oder mehreren der Ansprüche 1 bis 4, **dadurch gekennzeichnet, dass** es sich bei dem Copolyetherester um einen Ester aus Polyethylennaphthalat und einem Polyalkylenenoxidglycol handelt.

7. Der Polymerfilm nach Anspruch 5 bis 6, **dadurch gekennzeichnet, dass** es sich bei dem Polyalkylenoxidglycol um Polyethylenoxidglycol mit einem Molekulargewicht im Bereich von 800 bis 6000 handelt.

8. Der Polymerfilm nach einem oder mehreren der Ansprüche 1 bis 7, **dadurch gekennzeichnet, dass** es sich bei dem Copolyetheramid um ein Polyetheramid handelt, dessen Amidkomponente aus PA 6, PA 11 bzw. PA 12 besteht, wobei die Amidkomponente über Ether- oder Esterbindungen mit mindestens einem Polyalkylenoxidsegment verknüpft ist.

9. Der Polymerfilm nach Anspruch 8, **dadurch gekennzeichnet, dass** es sich bei dem Polyalkylenoxidsegment um Polyethylenoxiddiamin oder Polypropylenoxiddiamin mit einem Molekulargewicht im Bereich von 800 bis 6000 handelt.

10. Der Polymerfilm nach einem oder mehreren der Ansprüche 1 bis 9, **dadurch gekennzeichnet, dass** es sich bei den phosphorhaltigen Comonomeren um Phosphaphenanthrenderivate handelt.

11. Der Polymerfilm nach einem oder mehreren der Ansprüche 1 bis 9, **dadurch gekennzeichnet, dass** zusätzlich zu den einkondensierten phosphorhaltigen Comonomeren und/oder dem mindestens einen phosphorhaltigen beigemischten Additiv mindestens ein weiteres flammhemmendes, jedoch keinen Phosphor enthaltendes Additiv enthalten ist.

12. Verwendung des Polymerfilms nach einem oder mehreren der Ansprüche 1 bis 11 in Form von textilen Flächengebilden, auf die der Polymerfilm laminiert ist.

13. Verwendung nach Anspruch 12, **dadurch gekennzeichnet, dass** die textilen Flächengebilde zur Herstellung von wasserdichten und wasserdampfdurchlässigen Bekleidungen verwendet werden.

14. Verwendung nach Anspruch 13, **dadurch gekennzeichnet, dass** die Bekleidungen Schutzkleidung und Schuhe sind.

15. Verwendung des Polymerfilms nach Anspruch 12, **dadurch gekennzeichnet, dass** die textilen Flächengebilde zur Herstellung von Zelten verwendet werden.

16. Verwendung nach Anspruch 12, **dadurch gekennzeichnet, dass** die textilen Flächengebilde in der Bauindustrie verwendet werden.

17. Verwendung nach Anspruch 16, **dadurch gekennzeichnet, dass** die textilen Flächengebilde als Dachunterspannbahnen verwendet werden.

## Claims

1. A water-tight and water-vapor-permeable polymer film having a water-vapor permeability of at least 1000 g/(m²· day) comprising one or a plurality of polymers on the basis of copolyetherester or copolyetheramide or a mixture of copolyetherester and copolyetheramide, **characterized in that** the one polymer or the plurality of polymers contains phosphorus, wherein the phosphorus
a) is present in the form of phosphorus-containing comonomers which are condensed in the one polymer or in the plurality of polymers, or
b) is present in the form of at least one phosphorus-containing additive which is mixed with the one polymer or the plurality of polymers, wherein in the case of the phosphorus-containing additives these are
i) phosphinic acid salts or diphosphinic acid salts or polymers thereof or mixtures thereof or aromatic polyphosphates or
ii) melamine phosphates or melamine polyphosphates, or
c) is present having a first part by weight relative to the polymer film in the form of phosphorus-containing comonomers as under a) and having a second part by weight relative to the polymer film in the form of at least one phosphorus-containing additive as under b).

2. The polymer film according to Claim 1, **characterized in that** the phosphorus is contained in a concentration of at least 0.4 wt.% relative to the polymer film.

3. The polymer film according to Claim 1 or 2, **characterized in that** in the embodiment c), the first part by weight lies in the range from 0.01 % to 85% and the second part by weight lies in the range from 15% to 99.99%, and the sum of the first and the second parts by weight amounts to 100%, respectively.

4. The polymer film according to one or more of Claims 1 to 3, **characterized in that** the phosphorus is contained in the phosphorus-containing comonomers as a side group.

5. The polymer film according to one or more of Claims 1 to 4, **characterized in that** the copolyetherester is an ester made from polybutylene terephthalate and a polyalkylene oxide glycol.

6. The polymer film according to one or more of Claims 1 to 4, **characterized in that** the copolyetherester is an ester made from polyethylene naphthalate and a polyalkylene oxide glycol.

7. The polymer film according to Claims 5 to 6, **characterized in that** the polyalkylene oxide glycol is a polyethylene oxide glycol with a molecular weight in the range from 800 to 6000.

8. The polymer film according to one or more of Claims 1 to 7, **characterized in that** the copolyetheramide is a polyether amide, the amide component thereof consists of PA 6, PA 11, or PA 12, wherein the amide component is bonded to at least one polyalkylene oxide segment via ether or ester bonds.

9. The polymer film according to Claim 8, **characterized in that** the polyalkylene oxide segment is a polyethylene oxide diamine or a polypropylene oxide diamine with a molecular weight in the range from 800 to 6000.

10. The polymer film according to one or more of Claims 1 to 9, **characterized in that** the phosphorus-containing comonomers are phosphaphenanthrene derivatives.

11. The polymer film according to one or more of Claims 1 to 9, **characterized in that** at least one further, flame-resistant additive, which however contains no phosphorus, is contained in addition to the condensed phosphorus-containing comonomers and/or the at least one phosphorus-containing admixed additive.

12. Use of the polymer film according to one or more of Claims 1 to 11 in the form of textile fabrics to which the polymer film is laminated.

13. Use according to Claim 12, **characterized in that** the textile fabrics are used to produce water-tight and water-vapor-permeable apparel.

14. Use according to Claim 13, **characterized in that** the apparel is protective clothing or shoes.

15. Use of the polymer film according to Claim 12, **characterized in that** the textile fabrics are used to produce tents.

16. Use according to Claim 12, **characterized in that** the textile fabrics are used in the construction industry.

17. Use according to Claim 16, **characterized in that** the textile fabrics are used as a roofing underlayment.

## Revendications

1. Film polymère étanche à l'eau et perméable à la vapeur d'eau, avec une perméabilité à la vapeur d'eau d'au moins 1000 g/(m^{2 ·} jour), comprenant un ou plusieurs polymères à base de copolyéther ester ou de copolyéther amide ou d'un mélange de copolyéther ester et de copolyéther amide, **caractérisé en ce que** le polymère ou la pluralité de polymères contiennent du phosphore, sachant que le phosphore
a) est présent sous forme de comonomères phosphorés, qui sont incorporés par condensation dans le polymère ou dans la pluralité de polymères, ou
b) est présent sous la forme d'au moins un additif phosphoré, qui est mélangé au polymère ou à la pluralité de polymères, les additifs phosphorés étant
i) des sels d'acide phosphinique ou des sels d'acide diphosphinique ou leurs polymères ou leurs mélanges ou des polyphosphates aromatiques, ou
ii) des phosphates de mélamine ou des polyphosphates de mélamine,
ou
c) est présent, avec une première partie en poids par rapport au film polymère, sous forme de comonomères phosphorés selon a) et, avec une deuxième partie en poids par rapport au film polymère, sous la forme d'au moins un additif phosphoré selon b).

2. Film polymère selon la revendication 1, **caractérisé en ce que** le phosphore est présent dans une concentration d'au moins 0,4 pour cent en poids par rapport au film polymère.

3. Film polymère selon la revendication 1 ou 2, **caractérisé en ce que** dans le mode de réalisation c), la première partie en poids est comprise dans la plage allant de 0,01 à 85 %, et la deuxième partie en poids est comprise dans la plage allant de 15 à 99,99 %, et que la somme de la première et de la deuxième partie en poids est chaque fois de 100 %.

4. Film polymère selon une ou plusieurs des revendications 1 à 3, **caractérisé en ce que** le phosphore est présent en tant que groupe secondaire dans les comonomères phosphorés.

5. Film polymère selon une ou plusieurs des revendications 1 à 4, **caractérisé en ce que** le copolymère ester est un ester constitué de polybutylène téréphtalate et d'un poly(oxyde d'alkylène) glycol.

6. Film polymère selon une ou plusieurs des revendications 1 à 4, **caractérisé en ce que** le copolyéther ester est un ester constitué de polyéthylène naphtalate et d'un poly(oxyde d'alkylène) glycol.

7. Film polymère selon les revendications 5 à 6, **caractérisé en ce que** le poly(oxyde d'alkylène) glycol est du poly(oxyde d'éthylène) glycol avec un poids moléculaire compris dans la plage allant de 800 à 6000.

8. Film polymère selon une ou plusieurs des revendications 1 à 7, **caractérisé en ce que** le copolyéther amide est un polyéther amide dont le constituant amide et formé de PA 6, PA 11 ou PA 12, le constituant amide étant combiné par des liaisons éther ou ester avec au moins un segment de poly(oxyde d'alkylène).

9. Film polymère selon la revendication 8, **caractérisé en ce que** le segment de poly(oxyde d'alkylène) est la diamine de poly(oxyde d'éthylène) ou la diamine de poly(oxyde de propylène) avec un poids moléculaire compris dans la plage allant de 800 à 6000.

10. Film polymère selon une ou plusieurs des revendications 1 à 9, **caractérisé en ce que** les comonomères phosphorés sont des dérivés de phosphaphénanthrène.

11. Film polymère selon une ou plusieurs des revendications 1 à 9, **caractérisé en ce que**, en plus des comonomères phosphorés incorporés par condensation et/ou de l'additif phosphoré mélangé, au nombre d'au moins un, au moins un autre additif ignifugeant, mais ne contenant pas de phosphore, est présent.

12. Utilisation du film polymère selon une ou plusieurs des revendications 1 à 11, sous forme de structures plates textiles, sur lesquelles le film polymère est appliqué par laminage.

13. Utilisation selon la revendication 12, **caractérisée en ce que** les structures plates textiles sont utilisées pour fabriquer des vêtements étanches à l'eau et perméables à la vapeur d'eau.

14. Utilisation selon la revendication 13, **caractérisée en ce que** les vêtements sont des vêtements de protection et des chaussures.

15. Utilisation du film polymère selon la revendication 12, **caractérisée en ce que** les structures plates textiles sont utilisées pour fabriquer des tentes.

16. Utilisation selon la revendication 12, **caractérisée en ce que** les structures plates textiles sont utilisées dans l'industrie du bâtiment.

17. Utilisation selon la revendication 16, **caractérisée en ce que** les structures plates textiles sont utilisées comme bandes d'étanchéité de toitures.
